(19) Europäisches Patentamt
European Patent Office
Office européen des brevets

(11) **EP 1 214 888 B1**

(12) **EUROPEAN PATENT SPECIFICATION**

(45) Date of publication and mention
of the grant of the patent:
**21.03.2007 Bulletin 2007/12**

(51) Int Cl.:
*A23D 9/013* (2006.01)        *A21D 2/16* (2006.01)
*A21D 10/00* (2006.01)        *A21D 2/32* (2006.01)

(21) Application number: **01204983.9**

(22) Date of filing: **18.12.2001**

(54) **Liquid bread improver**

Flüssiges Brotverbesserungsmittel

Améliorant liquide pour boulangerie

(84) Designated Contracting States:
**AT BE CH CY DE DK ES FI FR GB GR IE IT LI LU MC NL PT SE TR**

(30) Priority: **18.12.2000 EP 00204589**

(43) Date of publication of application:
**19.06.2002 Bulletin 2002/25**

(73) Proprietor: **CSM Nederland B.V.**
**1000 AH Amsterdam (NL)**

(72) Inventors:
• **Smorenburg, Hermanus**
**2313 RJ Leiden (NL)**
• **van der Schee, Gerrit**
**3235 TL Rockanje (NL)**
• **Vermeer-Mols, Linda Johanna Maria**
**2612 EC Delft (NL)**
• **Morrish, Deborah Mary**
**Great Sutton,**
**Cheshire CH66 2GT (GB)**
• **Johnson, Michael Kenneth**
**Meols,**
**Wirral CH47 ONN (GB)**

(74) Representative: **van Westenbrugge, Andries et al**
**Nederlandsch Octrooibureau**
**P.O. Box 29720**
**2502 LS The Hague (NL)**

(56) References cited:
**EP-A- 0 572 051          DE-U- 29 719 287**

• **DATABASE WPI Derwent Publications Ltd., London, GB; AN 1984-111121 XP002167496 "Fluid oil and fat composition for bread production" & JP 59 051742 A (ASAHI DENKA KOGYO), 26 March 1984 (1984-03-26)**
• **DOOREN VAN C ET AL: "GROTE VARIATIE IN AANBOD EMULGATOREN" FOOD MANAGEMENT,NL,AMERSFOORT, vol. 15, no. 4, 1997, pages 20,25-29, XP000672920**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

Bread improver compositions include a variety of additives intended to improve the quality of bread and other bakers' goods, for example cake mixes, and for leavened and unleavened baked products generally. They include emulsifiers, enzymes, antioxidants, sugars, food acids and acidity regulators, milk solids and vitamins and may be accompanied by a proportion of flour to facilitate admixture with remaining bakery ingredients consisting largely of flour. Fats and/or liquid glyceride oils are also present.

It has been known for some time that it is desirable to provide a bread improver composition in a liquid form. The reason is that handling of these type of materials in powder form can be problematic. For instance, workers could breath in the powders. The powder can cause allergic reactions. Also, powders are more difficult to dose in industrial applications than fluid compositions. A prerequisite for liquid bread improver compositions is that they should be fluid at temperatures of about 5 to 25 °C and that they should be stable on storage at these temperatures, i.e. do not separate into distinct phases, including a precipitate, and keep their functionality over time.

WO 99/48377 relates to a composition comprising an oil and/or oil mimetic component; a triglyceride fatty acid and/or a high melting point emulsifier component and a particulate component. The particulate component is in a stable suspension within a crystal matrix formed by the triglyceride fatty acid. The drawback of a composition according to this document is that only a relative small amount of functional ingredients such as emulsifiers can be incorporated in the bread improver.

EP-A 0 572 051 describes liquid, bread improving compositions with improved stability that comprise 75-95 wt.% vegetable oil, 1-5 wt.% hydrogenated vegetable oil, 1-5 wt.% partly hydrogenated vegetable oil, 2-20 wt.% emulsifiers including DATA-esters, 0.1-0.5 wt.% enzymes and 0.1-1.0 wt.% oxidants. These products are prepared byt melting and mixing the fat components at 50-75°C, kneading and working the mixture through a Votator while cooling to a temperature of 20-32°C, fluidising the liquid dispersion of fat crystals with mild stirring for at least 1 hour at 25-35°C, adding the enzymes and the oxidants and stirring the resulting mixture from 30 minutes to 4 hours at ambient temperature.

Derwent publication XP002167496 (patent abstract of JP59051742) relates to a composition which can be prepared by (a) heat-melting oil and fat, (b) cooling to below 40°C, (c) adding powdered glycerin fatty acid ester, of which granules are mostly below 200 microns, to the oil and fat before the crystallisation of triglyceride proceeds to solid fat indicator (SFI) at most 0.5, and (d) if necessary, further cooling for crystallising triglyceride so that SFI of the mixture is 0.5-3.

An object of the present invention is to provide a bread improver containing a relative high amount of functional ingredients such as emulsifiers, e.g. monoglycerides and diacetyl tartaric esters of mono and diglycerides. A further object is that such a bread improver is fluid, i.e. pumpable or pourable and that it is stable upon storage.

The present invention thus provides a liquid bread improver composition, comprising

   (a) 30 to 94 % by weight, based on the weight of the total composition of an oil and/or oil mimetic component;

   (b) 1 to 10 % by weight, based on the weight of the total composition, of a triglyceride fat; and

   (c) a particulate component, comprising:

       5 to 40 % by weight, based on the weight of the total composition, of a high melting point emulsifier; and
       0 to 60 % by weight, based on the weight of the total composition of further bread improver additives.

The structure of the bread improver of the invention with this composition is a continuous fat phase having the particulate component dispersed therein. Although it is known according to the prior art to use a high melting point emulsifier as part of the triglyceride fat component (b), up to now it was not known to incorporate such an emulsifier as a separate particulate component which is dispersed throughout the fat phase. It is noted that, unlike component (b), the particulate component does not form a crystal matrix. Preferably component (c) has a surface area of at least 2 m$^2$ per gram. A protocol for determining the surface area is disclosed in WO 99/48377 (protocol C).

Component (a) according to the invention is an oil and/or an oil mimetic component and is suitably present in an amount of 40 to 94 % by weight, preferably 50 to 80 % by weight, based on the weight of the total composition.

The oil of component (a) is preferably a liquid, edible triglyceride oil. The oil displays a solid fat content of less than 10 % at 20 °C. The oil has preferably a iodine value of 20 to 210, preferably 80 to 140. Examples of suitable oils are sunflower seed oil, safflower oil, soy bean oil, rapeseed oil, maize oil, peanut oil, olive oil, cottonseed oil, olein fractions of natural oils, such as palm oil olein, interesterified oils and derivatives and mixtures thereof.

Although liquid, edible triglyceride oils are preferred, also "oil mimetic" component can be used. The term "oil mimetic" is a material that exhibits oil like properties. It is liquid and pumpable. The oil mimetic components can be an emulsifier, paraffin or oil substitute, preferably a liquid food emulsifier such as lecithin, sorbitan monooleate, sorbitan monolaurate, polysorbate, diacetyl tartaric esters of fatty acid mono-di glycerides, sucrose esters of fatty acids.

The triglyceride fat is characterised by a melting point higher than 50 ˚C, preferably higher than 60 ˚C. The triglyceride fat is preferably esterified with acids having a chain length of 4 to 24 carbon atoms. Its iodine value is preferably 0 to 5. The hard fat component of these blends must have the ability to form a crystal network in the compositions. The triglyceride fat is present in an amount of 1 to 10 % by weight, preferably less than 8 % by weight, more preferably less than 5 % by weight, based on the weight of the total composition.

The triglyceride fat is preferably selected from hardened triglyceride fat, such as hardened rapeseed oil, hardened sunflower seed oil, hardened soy bean oil, hardened palm oil, hardened fish oil, hardened maize oil, hardened peanut oil, hardened safflower oil, hardened olive oil, derivatives and mixtures thereof. The triglyceride fat can also be a fat fraction such as palm stearin. Preferably the triglyceride fat is a fully hardened fat, which means having a iodine value of less than 2.

Component (b) forms a crystal lattice within the present composition that helps to keep the particulate component suspended during prolonged storage. During storage the crystal lattice present in the composition of the invention may change. For example, fat crystals may change from the $\alpha$ into the $\beta$'-form and on to the $\beta$-form, or even directly from the $\alpha$ into the $\beta$-form. Such changes have an impact on the e.g. the viscosity and pourability of the present composition. Particularly stable compositions are obtained if the present composition is substantially free of crystalline component (b) in the $\beta$'-form. More preferably the crystalline component (b) is substantially in the $\beta$-form.

The particulate component in the present composition can be clearly distinguished from the continuous fat phase. The average particle size of the particulate component is at least 10 $\mu$m. This means that at least 50 %, preferably at least 80 % of the particles has a particles has a particle size larger than 10 $\mu$m. The particle size can be determined with techniques known in the art, for instance a Malvern Laser Particle Counter (TM).

A unique characteristic of the present composition is that the particulate component is not substantially dissolved, and does not substantially dissolve, into components (a) and (b). This means that during preparation of the bread improver care is taken not to allow the particulate phase to dissolve in components (a) and (b). In the final product less than 10 wt. %, preferably less than 5 wt. % of the amount of component (c) is dissolved in components (a) and/or (b).

The bread improver composition according to the invention is a stable suspension. The term "stable suspension" means that the composition has a sedimentation index (S.I.) of less than 50 %, preferably less than 20 %. The separation index is preferably greater than 70 %, more preferably greater than 90 %. Sedimentation index and separation index are determined according to protocol A and B of WO 99/48377, which is incorporated by reference.

The bread improver composition is further characterised by its rheological properties. The composition is liquid, i.e. pourable or pumpable. In particular the Bostwick value is at least 1 cm/30 sec, preferably at least 3 cm/30 sec, most preferably at least 4 cm/30 sec. The Bostwick value is determined in a Bostwick Consistometer (TM), by measuring the distance which a sample of material flows under its own weight in 30 seconds at 20 ˚C. The lower the Bostwick value, the thicker the sample and the higher its consistency.

A further parameter determining rheological properties is the yield stress. The yield stress, determined as described hereafter, is preferably less than 150 Pa, more preferably less than 100 Pa, most preferably less than 70 Pa. These properties are substantially maintained during storage at a temperature of about 15 ˚C. This means that for a period of at least 4 weeks, preferably at least 8 weeks no substantial changes in Bostwick value and yield stress occur and that they remain above, respectively below the threshold values given above.

The high melting point emulsifier is preferably characterised by a iodine value smaller than 20, in particular smaller than 10, most preferred smaller than 5, in particular 2. The dropping point of the emulsifier is higher than 50 ˚C, in particular higher than 60 ˚C. The high melting point emulsifier can also consist of a mixture of emulsifiers as long as the mixture also fulfils the above criteria for iodine value and dropping point.

Typical high melting point emulsifiers which fulfil the above criteria are diacetyl tartaric esters of saturated mono- and/or diglycerides or saturated monoglycerides. Diacetyl tartaric esters of saturated mono and/or diglycerides and saturated monoglycerides are commercially available. The monoglycerides need not necessarily be pure and can thus for instance contain diglycerides. Preferably these monoglyceride products contain at least 40 % monoglycerides. The monoglycerides can also be in the form of distilled monoglycerides which indicates a purity level of ca. 90 %.

The high melting point emulsifier is present in an amount of 5 to 40 % by weight, preferably more than 7 % by weight, most preferably at least 10 % by weight, based on the total weight of the bread improver composition.

The particulate component (c) including the high melting point emulsifier and optionally additives, preferably has an average particle size of at least 10 $\mu$m. A smaller particle size may result in dissolution of the particulate emulsifier component. The upper limit of the particle size is determined by sedimentation of the particulate component, and will generally be 1000 $\mu$m at the most. Preferably the average particle size of the particulate component (c) is within the range of 200-700 $\mu$m, most preferably it is in the range of 350-550 $\mu$m.

The composition can further contain 0 to 60 % by weight, preferably 3 to 30 % by weight, based on the weight of the total composition, of commonly applied bread improver additives, including enzymes, salts, further emulsifiers, hydrocolloids, flavors, reductants, proteins, starches, minerals, vitamins, sweeteners, baking powders, flour, animal fat, acids, yeast, colorings, spices, herbs, gluten, preservatives, antioxidants and fibers.

The composition preferably comprises substantially no water, i.e. preferably less than 5 % by weight, more preferably less than 1 % by weight, in particular less than 0.5 % by weight, based on the weight of the total composition.

The bread improver composition can be prepared by methods known in the art. Typically at least components (a) and (b) will be combined and the temperature adjusted and maintained to allow formation of a stable (equilibrated) fat matrix. Subsequently component (c) and optionally (d) will be added whilst the mixture is agitated. It is also possible to first mix a part of components (a) and (b) and to mix in the remaining parts of (a) and (b) together with component (c), provided that remaining parts of (a) and (b) were stabilised prior to the admixture with component (c).

The composition of the invention can also be produced with a process similar to those used in the production of liquid margarine of shortening. Components (a), and (b) are combined and crystallised in a tube chiller and are subsequently equilibrated at a temperature which is close to the desired storage temperature for a sufficiently long period of time to ensure that a stable crystalline fat matrix is obtained. Subsequently component (c) and optionally component (d) are added under agitation. As a result, component (b), the triglyceride fat, forms a crystal matrix.The resulting product, which comprises the particulate component as well as the crystal matrix formed by the triglyceride fat, is still pumpable. The crystal matrix of the triglyceride fat helps to keep the particulate component (c) suspended in the oil.

In a preferred embodiment of the present process, components (a) and (b) are combined at a temperature which is sufficiently high to ensure that the resulting blend contains essentially no solid fat. Subsequently the blend is cooled down, preferably a scraped surface heat exchanger, to a temperature which preferably is below 15˚C, more preferably below 10˚C. The resulting cooled blend is preferably equilibrated at a temperature of between 10 and 25˚C, more preferably at a temperature between 15 and 25˚C, for at least 6 hours, more preferably at least 12 hours and most preferably at least 24 hours, before component (c) and optionally component (d) are added. Components (c) and (d) are preferably added in the form of a powder and homogeneously dispersed throughout the blend of components (a) and (b) under agitation. During the admixture of component (c) the optional component (d) the temperature of the blend is preferably maintained between 10 and 25˚C, more preferably between 15 and 25˚C,

Determination of the yield stress

Flow measurements can be used as a quick analysis of the flow behaviour of a dispersion. The viscosity of a liquid is determined as the shear stress divided by the shear rate. When the shear stress linearly varies with the rate, the liquid is called Newtonian; the viscosity is independent of the shear rate. The dispersion is said to be shear thinning when the viscosity of a dispersion decreases with increasing rate. The increase of the shear stress is no longer linear with the rate increase.

A further deviation from the ideal situation is when the dispersion should overcome a certain threshold stress value to start to flow: the yield value. This type of behaviour occurs for most of the liquid bread improvers as described in this invention. It can be described by the so-called Herschel-Bulkley analysis model, which fits a model equation through the data points. This model is expressed in the following equation:

$$\tau = \tau_0 + k\,\dot{\gamma}^n$$

where $\tau$ is the shear stress, $\tau_0$ is the yield stress, $k$ is a consistency constant, $\dot{\gamma}$ the shear rate, and $n$ the rate index.

If the yield stress is above a certain value, the dispersion is not regarded as pourable anymore.

Flow measurements can be performed with a Carrimed CLS[2] 500 rheometer from TA Instruments (TM) with a 6 cm stainless steel flat plate setting and a gap size of 1000 micrometer. Measurement temperatures are 15, 20 and 25 ˚C. In this plate-plate setting, the shear stress is increased with logarithmic ramp mode from 1 to 200 Pascal in 5 minutes and 45 seconds by increasing the shear rate (rotation speed of the upper plate) and back from 200 to 1 Pa in 5 minutes and 45 seconds. Shear stress is the controlled variable. Next the raw data are analyzed with the TA Instruments (TM) Rheology Solutions Software package DATA V 1.2.2, data module 1994-1997. The value for yield stress is determined by analysing the shear rate and shear stress data in the range from 1 to 200 s-1 with the Herschel-Bulkley model.

The invention is further illustrated by means of the following examples:

Examples 1-4

Four types of bread improvers A to D were prepared from the compositions shown in the following table (all amounts are in parts per weight):

|                                                                          | A    | B  | C    | D  |
| ------------------------------------------------------------------------ | ---- | -- | ---- | -- |
| 95 parts rape oil + 5 parts fully hardened fractionated palm stearin oil | 87.5 | 75 | 87.5 | 75 |
| Distilled saturated monoglyceride Iodine value max 2 Chain length C16-C18 (for example Hymono 8903) | 12.5 | 25 |      |    |
| Distilled monoglyceride Iodine value 35 - 45 (for example Dimodan SVM)    |      |    | 12.5 | 25 |

Hymoneo 8903 (ex Quest International, the Netherlands) is made of fully hardened fat and has an iodine value of max. 2. Dimodan SVM (ex Danisco Ingredients, Denmark) is partially hardened and has a iodine value of 35-45 and a dropping point of approximately 65˚C.

The bread improvers were prepared by the following process:

The rape oil and fully hardened fractionated palm stearin were heated and tempered at 60˚C and thoroughly mixed. The resulting blend was cooled and crystallised in a conventional manner on a Votator® line of 3 A-units and a C-unit providing a residence time of 5 minutes. The line was operated at a throughput of 60 kg/h. The applied cooling temperatures were between 0 and 25˚C, the rotor speed of the C-unit was 750 rpm and the outlet temperature 5˚C. The blend was subsequently rested (equilibrated) at the desired storage temperature. The monoglyceride was mixed into the fat blend under low shear at the desired storage temperature using a Moltomat® at 20-40 rpm. The mixture was agitated for 5-15 minutes, or longer if needed be, to fully disperse the monoglyceride powder throughout the blend.
The blends were stored at 15 and 25˚C. After 1, 3 and 9 weeks, samples were taken so as to assess the occurrence of oil separation and/or sedimentation and to evaluate pourability. None of the samples showed oil separation or sedimentation, but pourability was found to be very different. The pourability was determined by means of the aforementioned Bostwick method. The results obtained were as follows:

|                   | Bostwick(cm/30s.)                    |                                       |                                       |
| ----------------- | ------------------------------------ | ------------------------------------- | ------------------------------------- |
|                   | 1 week storage at 15˚C / 25˚C        | 3 weeks storage at 15˚C / 25˚C        | 9 weeks storage at 15˚C / 25˚C        |
| 12.5% Hymono 8903 | 5.5/4.5                              | 5.5/4.5                               | 5.5/4.5                               |
| 25% Hymono 8903   | 5.0/3.5                              | 5.1/3.5                               | 4.5/0                                 |
| 12.5% Dimodan SVM | 5.5/2.5                              | 3.8/2.5                               | 0/0                                   |
| 25% Dimodan SVM   | 2.0/0                                | 0/0                                   | 0/0                                   |

At 15˚C both samples containing Hymoneo 8903 exhibit an almost constant Bostwick value during 9 weeks of storage. The pourability of the products containing Dimodan SVM, however, as shown by the change in Bostwick value, showed decreasing pourability during said storage period.
After 9 weeks storage at a temperature of 25˚C the pourability of the 25% Dimodan SVM blend is zero. The pourability of the 12.5% Dimodan SVM blend was found to have decreased very rapidly during storage at 25˚C. The pourablity of the 25% Hymono 8903 blend was also observed to decrease during storage. However, the 12.5% Hymono 8903 remained pourable throughout the storage period.
Flow measurements were performed on the aforementioned products after storage at 15 and ˚C. The apparatus used was a Carrimed® CLS 500 rheometer (TA Instruments) with a 6 cm stainless steel flat plate setting and a gap size of 1000 micrometer. Measurement temperatures were 15 and 25˚C. In this plate setting the shear stress was increased with logarithmic ramp mode from 1 to 200 Pa in 5 minutes and 45 seconds by increasing the shear rate (rotational speed of the upper plate) and back from 200 to 1 Pa in 5 minutes and 45 seconds. Shear stress was the controlled variable. Next the raw data were analysed with the TA Instruments Rheology Solutions software package DATA VI.2.2, data module 1994-1997. The value for yield stress was determined by analysing the shear rate and shear stress data in the range form 1 to 200 $s^{-1}$ using the Herschel-Bulkley model. The results were as follows:

| | Yield stress (Pa) | |
|---|---|---|
| | 1 week storage at 15˚C / 25˚C | 9 weeks storage at 15˚C / 25˚C |
| 12.5% Hymono 8903 | 25/30 | 25/55 |
| 25% Hymono 8903 | 25/45 | 25/125 |
| 12.5% Dimodan SVM | 28/60 | 200/200 |
| 25% Dimodan SVM | 85/200 | 200/200 |

At 15˚C both samples containing Hymono 8903 exhibit a similar yield value which remains constant during the 9 week storage period. After 9 weeks storage at 25˚C, the 25% Dimodan SVM blend displayed a very high yield stress value and was not pourable. The yield stress of the 12.5% Dimodan SVM blend was found to increase during the storage time of 9 weeks.

Examples 5 and 6

| Example 5 | Step A | Step B |
|---|---|---|
| Vegetable Oil | 95% | 83% |
| Fully hardened fractionated palm stearin oil | 5% | |
| Distilled saturated monoglyceride | | 12% |
| Powdered ingredients (enzymes, for example fungal alpha amylases, hemicellulases, oxidants, for example ascorbic acid etc) | | 5% |
| | 100 | 100 |

| Example 6 | Step A | Step B |
|---|---|---|
| Vegetable Oil | 95% | 80% |
| Fully hardened fractionated palm stearin oil | 5% | |
| Distilled saturated monoglyceride | | 20% |
| | 100 | 100 |

Step A: The heated oils (above 70˚C) are rapidly chilled (to 3 - 5˚C) through a votation system to create a crystal structure This crystal structure is able to maintain adequate viscosity during storage, transportation and secondary mixing at ambient temperatures over a specified shelflife.

Step B: Following production the crystallised blend was subjected to a maturing time at ambient temperature of at least 24 hours. The blend obtained from process A is subsequently mixed with the other components indicated in the above tables. Mixing conditions are chosen such that a homogeneous mixture is obtained which retains adequate viscosity to ensure that no separation, thickening or thinning occurs during storage and transportation at ambient temperatures during shelflife.

**Claims**

1. Liquid bread improver composition, comprising

(a) 30 to 94 % by weight, based on the weight of the total composition of an oil and/or oil mimetic component;
(b) 1 to 10 % by weight, based on the weight of the total composition, of a triglyceride fat; and
(c) a particulate component, comprising:

5 to 40 % by weight, based on the weight of the total composition, of a high melting point emulsifier having an iodine value of less than 20; and

0 to 60 % by weight, based on the weight of the total composition of further bread improver additives

wherein the component (b) forms a crystal lattice that helps to keep the particulate component suspended during prolonged storage.

2. Composition according to claim 1, wherein the high melting point emulsifier has a iodine value smaller than 20, preferably smaller than 10.

3. Composition according to claim 1 or 2, wherein the high melting point emulsifier has a dropping point higher than 50 ˚C, preferably higher than 60 ˚C.

4. Composition according to claim 1, 2 or 3, wherein the high melting point emulsifier is a diacetyl tartaric ester of saturated mono- and/or diglycerides or a saturated monoglyceride.

5. Composition according to claim 4, wherein the high melting point emulsifier is a saturated monoglyceride.

6. Composition according to any of the preceding claims, wherein the triglyceride fat has a melting point higher than 50 ˚C.

7. Composition according to claim 6, wherein the triglyceride fat is a fully hardened fat.

8. Composition according to any of the preceding claims, wherein the high melting point emulsifier is present in an amount of at least 7 % by weight, preferably at least 10 % by weight.

9. Composition according to any of the preceding claims, wherein component (a) is a liquid vegetable oil.

10. Composition according to any of the preceding claims, wherein the particulate component (c) has an average particle size of at least 10 $\mu$m.

11. Process for the preparation of a composition according to any of the preceding claims, comprising combining at least components (a) and (b) and adjusting and maintaining the temperature to allow formation of a fat matrix and adding component (c) whilst the mixture is agitated.

12. Process according to claim 11, wherein the combined components (a) and (b) are equilibrated at a temperature between 10 and 25˚C for a sufficiently long period of time to ensure that a stable crystalline fat matrix is obtained, after which component (c) is added under agitation.

**Patentansprüche**

1. Flüssige Brotbackmittelzusammensetzung, umfassend

(a) 30 bis 94 Gew.-% basierend auf dem Gewicht der Gesamtzusammensetzung eines Öls und/oder eines ölartigen Bestandteils,
(b) 1 bis 10 Gew.-% basierend auf dem Gewicht der Gesamtzusammensetzung eines Triglycerid-Fettes und
(c) ein teilchenartiger Bestandteil, umfassend:

5 bis 40 Gew.-% basierend auf dem Gewicht der Gesamtzusammensetzung eines Emulgators mit hohem Schmelzpunkt und einem Jodwert von weniger als 20, und
0 bis 60 Gew.-% basierend auf dem Gewicht der Gesamtzusammensetzung von weiteren Brotbackmittelzusätzen,

wobei der Bestandteil (b) ein Kristallgitter bildet das dazu beiträgt, dass der teilchenartige Bestandteil während einer längeren Lagerung in suspendierter Form gehalten wird.

2. Zusammensetzung nach Anspruch 1, wobei der Emulgator mit hohem Schmelzpunkt einen Jodwert aufweist, der geringer als 20, vorzugsweise geringer als 10 ist.

3. Zusammensetzung nach Anspruch 1 oder 2, wobei der Emulgator mit hohem Schmelzpunkt einen Absenkpunkt von mehr als 50˚ C, vorzugsweise von mehr als 60˚ C besitzt.

4. Zusammensetzung nach Anspruch 1, 2 oder 3, wobei der Emulgator mit hohem Schmelzpunkt ein Diacetylweinsäureester von gesättigten Mono- und/oder DiGlyceriden oder ein gesättigtes Monoglycerid ist.

5. Zusammensetzung nach Anspruch 4, wobei der Emulgator mit hohem Schmelzpunkt ein gesättigtes Monoglycerid ist.

6. Zusammensetzung nach einem der vorhergehenden Ansprüche, wobei das Triglycerid-Fett einen Schmelzpunkt von mehr als 50˚ C besitzt.

7. Zusammensetzung nach Anspruch 6, wobei das Triglycerid-Fett ein vollständig gehärtetes Fett ist.

8. Zusammensetzung nach einem der vorhergehenden Ansprüche, wobei der Emulgator mit hohem Schmelzpunkt in einer Menge von mindestens 7 Gew.-%, vorzugsweise von mindestens 10 Gew.-% vorliegt.

9. Zusammensetzung nach einem der vorhergehenden Ansprüche, wobei der Bestandteil (a) ein flüssiges Pflanzenöl ist.

10. Zusammensetzung nach einem der vorhergehenden Ansprüche, wobei der teilchenartige Bestandteil (c) eine durchschnittliche Partikelgröße von mindestens 10 $\mu$m aufweist.

11. Verfahren zur Herstellung einer Zusammensetzung nach einem der vorhergehenden Ansprüche, umfassend das Vermengen von zumindest den Bestandteilen (a) und (b) und das Einstellen und Aufrechterhalten der Temperatur, so dass die Bildung einer Fettmatrix ermöglicht wird, und das Hinzufügen des Bestandteils (c) während das Gemisch gemischt wird.

12. Verfahren nach Anspruch 11, wobei die vermengten Bestandteile (a) und (b) bei einer Temperatur zwischen 10 und 25˚ C für einen ausreichend langen Zeitraum äquilibriert werden, um sicherzustellen, dass eine stabile kristalline Fettmatrix erhalten wird; danach wird Bestandteil (c) unter Vermischen zugegeben.

**Revendications**

1. Composition d'améliorant liquide pour boulangerie comprenant :

   (a) 30 à 94 % en poids, sur la base du poids total de la composition d'un composant huileux et/ou mimétique de l'huile ;
   (b) 1 à 10 % en poids, sur la base du poids total de la composition d'une graisse triglycérique et
   (c) un composant particulaire comprenant :

      - 5 à 40 % en poids, sur la base du poids total de la composition, d'un émulsifiant à haut point de fusion ayant un indice d'iode inférieur à 20 ; et
      - 0 à 60 % en poids, sur la base du poids total de la composition d'autres adjuvants d'améliorant pour boulangerie

   dans laquelle le composant (b) forme un treillis de cristal qui aide à maintenir en suspension le composant particulaire pendant un stockage prolongé.

2. Composition selon la revendication 1,
   dans laquelle l'émulsifiant à haut point de fusion a un indice d'iode inférieur à 20, de préférence inférieur à 10.

3. Composition selon la revendication 1 ou 2,
   dans laquelle l'émulsifiant à haut point de fusion a un point de goutte supérieur à 50˚C, de préférence supérieur à 60˚C.

4. Composition selon la revendication 1, 2 ou 3,
dans laquelle l'émulsifiant à haut point de fusion est un ester tartrique de diacétyle de monoglycérides et/ou diglycérides saturées ou de monoglycéride saturée.

5. Composition selon la revendication 4,
dans laquelle l'émulsifiant à haut point de fusion est une monoglycéride saturée.

6. Composition selon l'une quelconque des revendications précédentes,
dans laquellea graisse triglycérique a un point de fusion supérieur à 50˚C.

7. Composition selon la revendication 6,
dans laquelle la graisse triglycérique est une graisse complètement durcie.

8. Composition selon l'une quelconque des revendications précédentes,
dans laquelle l'émulsifiant à haut point de fusion est présent à hauteur d'au moins 7 % en poids, de préférence d'au moins 10 % en poids.

9. Composition selon l'une quelconque des revendications précédentes,
dans laquelle le composant (a) est une huile végétale liquide.

10. Composition selon l'une quelconque des revendications précédentes,
dans laquelle le composant particulaire (C) a une taille de particule moyenne d'au moins 10 $\mu$m.

11. Procédé pour la préparation d'une composition selon l'une quelconque des revendications précédentes, comprenant l'association au moins des composants (a) et (b) et le réglage et le maintien de la température pour permettre la formation d'une matrice de graisse et l'ajout de composant (c) pendant l'agitation du mélange.

12. Procédé selon la revendication 11,
dans laquelle les composants (a) et (b) combinés sont équilibrés à une température comprise entre 10 et 25˚C pour une période suffisamment longue pour garantir l'obtention d'une matrice de graisse cristalline stable, après quoi le composant (c) est ajouté sous agitation.